# FASCICULE DE BREVET EUROPEEN

(11) **EP 2 851 732 B1**
(45) Date de publication et mention de la délivrance du brevet: **19.04.2017**
(21) Numéro de dépôt: 14184511.5
(22) Date de dépôt: 12.09.2014
(51) Int. Cl.: G02B 23/06, G02B 26/06

(54) **Téléscope comportant un miroir actif et des moyens de surveillance interne dudit miroir actif**
Teleskop mit aktivem Spiegel und interner Kontrollvorrichtung für diesen Spiegel
Telescope with active mirror and internal control means for said mirror

(30) Priorité: 20.09.2013 FR 1302187
(43) Date de publication de la demande: 25.03.2015
(73) Titulaire: Thales, 92400 Courbevoie (FR)
(72) Inventeur: Blanc, Jean-François, 06210 MANDELIEU (FR); Houairi, Kamel, 06150 CANNES LA BOCCA (FR); Bernot, Marc, 06150 CANNES LA BOCCA (FR); Garin, Stéphane, 06550 LA ROQUETTE SUR SIAGNE (FR)
(74) Mandataire: Bréda, Jean-Marc

(56) Documents cités:
- WO-A1-00/67061
- FR-A1- 2 615 002
- US-B1- 7 289 736
- US-B1- 8 076 624

## Description

Le domaine général de l'invention est celui des télescopes comportant un miroir primaire et un miroir actif de correction des défauts du miroir primaire.

Un télescope comporte classiquement un miroir primaire qui peut être de grande dimension et une optique de reprise qui peut comporter plusieurs miroirs et qui forme de l'image intermédiaire au foyer du miroir primaire une image secondaire sur des moyens de photodétection. Dans un certain nombre d'applications, l'optique de reprise comporte un miroir déformable permettant de corriger les défauts du miroir primaire. On peut ainsi corriger en permanence les défauts dus, par exemple, aux variations thermiques.

Le document US 7,289,739 représente l'état de la technique. Le miroir déformable comporte des actionneurs qui permettent de déformer sa surface selon une loi prédéterminée. Il est essentiel qu'entre deux corrections du miroir primaire, la déformation imposée au miroir déformable soit parfaitement stable. L'ordre de grandeur de la stabilité recherchée est de l'ordre de 5 nanomètres. Or, pour certains types d'instrument embarqué, le délai entre deux corrections successives peut être très important, de l'ordre du mois. On comprend qu'il est alors difficile de garantir une stabilité aussi élevée pendant des durées aussi longues.

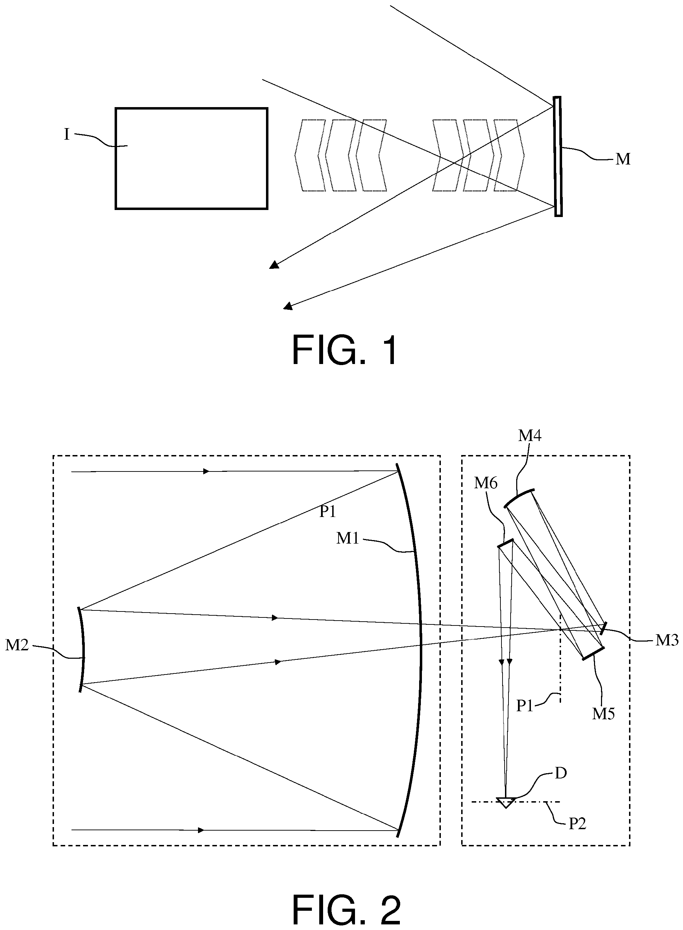

Il existe des moyens permettant de contrôler la surface d'un miroir déformable M. On peut, par exemple, comme représenté en figure 1, utiliser un interféromètre I dédié à cette surveillance et qui fonctionne à une incidence différente de celle d'utilisation du miroir déformable M. Cependant, l'intégration de tels moyens n'est pas nécessairement simple. Or, les télescopes actifs comportent des moyens internes permettant de surveiller la qualité globale de l'optique. Ces moyens comportent généralement un analyseur de front d'onde. Le télescope selon l'invention utilise ces moyens en les adaptant pour assurer également la surveillance du seul miroir déformable.

Plus précisément, l'invention a pour objet un télescope comportant au moins un système optique et des moyens d'analyse de la surface d'onde disposés dans le plan de focalisation dudit système optique, le système optique comprenant une optique de focalisation et une optique d'agrandissement, l'optique d'agrandissement comportant un miroir déformable à déformation contrôlée, caractérisé en ce que le télescope comporte des moyens de contrôle du miroir déformable, lesdits moyens de contrôle comportant une source disposée de façon que l'image de ladite source, après réflexion sur, au moins, le miroir déformable se focalise sur les moyens d'analyse de la surface d'onde.

Avantageusement, la source est disposée dans le plan focal intermédiaire de l'optique de focalisation.

Avantageusement, un correcteur d'aberration est implanté au niveau de la source ou au niveau des moyens d'analyse de surface d'onde.

Avantageusement, les moyens de contrôle comportent un miroir mobile ayant deux positions fixes, la première position fixe située en dehors du système optique, la seconde position fixe de contrôle étant telle que le miroir mobile masque tout ou partie du rayonnement issu de l'optique de focalisation, l'image de la source, après réflexion au moins sur le miroir déformable et le miroir mobile se focalisant sur les moyens d'analyse de la surface d'onde.

Avantageusement, le miroir mobile est un miroir sphérique concave, la source étant disposée au voisinage du plan de focalisation du système optique.

Avantageusement, les moyens de contrôle comportent un miroir fixe situé en dehors du système optique et agencé de façon que, le miroir mobile étant disposé dans sa seconde position, l'image de la source, après réflexion au moins sur le miroir déformable, le miroir mobile et le miroir fixe se focalise sur les moyens d'analyse de la surface d'onde.

Avantageusement, le miroir mobile est un miroir plan et le miroir fixe un miroir concave qui peut être, par exemple, elliptique.

Avantageusement, la source est disposée au voisinage du plan de focalisation du système optique.

Avantageusement, le miroir fixe est un miroir concave, par exemple elliptique, la source, de préférence ponctuelle, étant disposée au foyer dudit miroir.

Avantageusement, l'optique de focalisation comporte un miroir primaire concave et un miroir secondaire convexe.

Avantageusement, l'optique d'agrandissement comporte le miroir déformable à déformation contrôlée et au moins un miroir plan.

L'invention sera mieux comprise et d'autres avantages apparaîtront à la lecture de la description qui va suivre donnée à titre non limitatif et grâce aux figures annexées parmi lesquelles :
La figure 1 représente les moyens de contrôle d'un miroir déformable selon l'art antérieur ;
La figure 2 représente l'optique d'un télescope comportant un miroir déformable selon l'art antérieur ;
Les figures 3, 4, 5 et 6 représentent quatre modes de réalisation des moyens de contrôle d'un télescope selon l'invention ;
La figure 7 représente un exemple de tache aberrante au foyer intermédiaire d'un télescope.

A titre d'exemple, la figure 2 représente l'optique d'un télescope ne comportant pas de moyens de contrôle optique. Il comporte essentiellement deux parties qui sont d'une part, une optique de focalisation et d'autre part, une optique d'agrandissement. L'optique de focalisation comporte un premier grand miroir parabolique concave M1 et un miroir convexe M2, l'ensemble de ces deux miroirs forme d'un objet à l'infini une image dans son plan focal intermédiaire P1.

L'optique d'agrandissement comporte quatre miroirs notés M3, M4, M5 et M6 repliés dans une structure compacte. Les miroirs M3 et M6 sont des miroirs plans, le miroir M4 est un miroir concave asphérique. Le miroir M5 est un miroir sensiblement plan déformable à déformation contrôlée, c'est-à-dire un miroir dont la forme est pilotable par des actionneurs. Un détecteur D est disposé dans le plan focal du télescope P2. Ce détecteur analyse la surface d'onde. Cela peut être un analyseur de surface d'onde dédié ou un détecteur de mission utilisé pour analyser la surface d'onde.

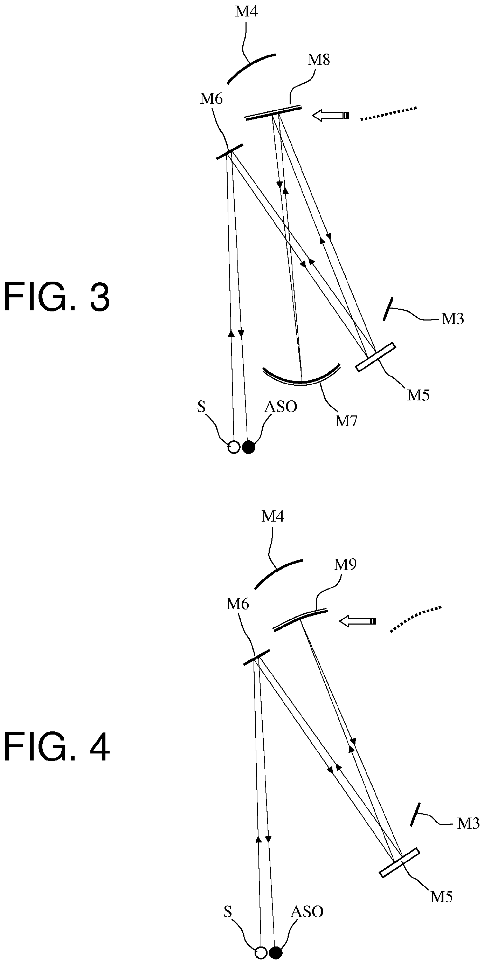

L'objet de l'invention est de disposer à l'intérieur de l'optique d'agrandissement précédente des moyens de contrôle permettant de vérifier la qualité optique du miroir déformable. A cette fin, les moyens de contrôle comportent une source disposée de façon que l'image de la source, après réflexion sur le miroir déformable se focalise sur les moyens d'analyse de la surface d'onde. La source peut être directement disposée dans l'optique d'agrandissement. On peut également la déporter au moyen d'une fibre optique. Cette source peut être ponctuelle ou quasi-ponctuelle. Des moyens de contrôle sont représentés sur les figures 3 à 6. Sur ces différentes figures, la source S est représentée par un cercle blanc, les moyens d'analyse de la surface d'onde ASO par un cercle noir, les rayons lumineux issus de la source par des traits fléchés et les moyens optiques spécifiques au contrôle par des doubles traits.

La figure 3 représente un arriérer plan technique. Dans cet exemple, les moyens de contrôle comportent un miroir concave sphérique M7 et un miroir plan M8 mobile occupant deux positions. La source S est disposée au voisinage du plan focal du télescope. Dans une première position de « repos », le miroir M8 est disposé en dehors de la combinaison optique du télescope, il est représenté en pointillés sur la figure 3, aucun contrôle du miroir déformable M5 n'est effectué, la source S est éteinte.

Dans une seconde position dite de « contrôle », le miroir M8 est déplacé devant le miroir de renvoi M4. La source S est allumée. L'agencement des miroirs M5, M6, M7 et M8 est tel que l'image de la source S par réflexions successives sur les M5, M6, M7 et M8 est située sur les moyens d'analyse de la surface d'onde ASO. Il suffit de choisir correctement l'emplacement des miroirs M7 et M8, leur inclinaison et la courbure du miroir sphérique M7.

Dans une première variante de l'arriérer plan technique représentée en figure 4, on supprime le miroir fixe M7 et on remplace le miroir plan mobile M8 par un miroir sphérique mobile M9. La source S reste disposée au voisinage du plan focal du télescope. L'agencement des miroirs M5, M6 et M9 est tel que l'image de la source S par réflexions successives sur les M5, M6 et M9 est située sur les moyens d'analyse de la surface d'onde ASO. Il suffit de choisir correctement l'emplacement, l'inclinaison et la courbure du miroir sphérique M9.

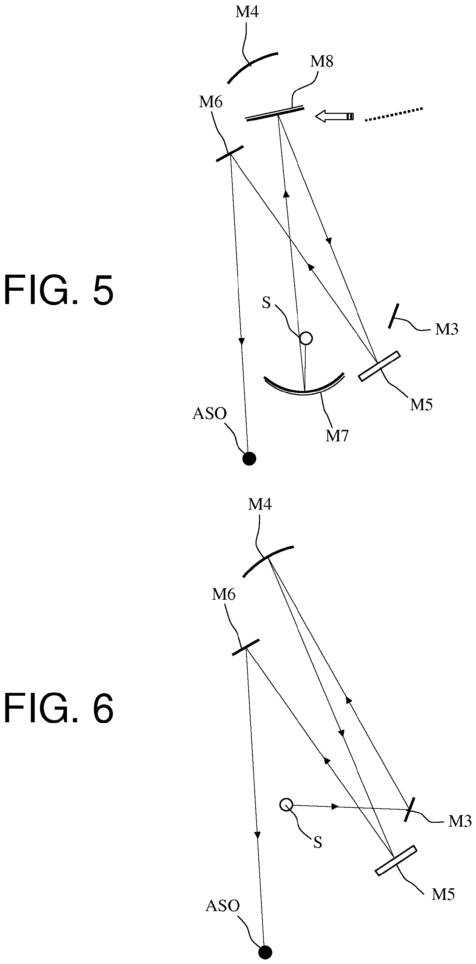

Dans une seconde variante de l'arriérer plan technique représentée en figure 5, on conserve le miroir concave M7 et le miroir plan M8 mobile mais on dispose la source S au foyer du miroir M7 qui peut être un miroir parabolique. Il est possible de remplacer le miroir parabolique par une lentille, la source S se trouve alors au foyer de cette lentille. L'agencement des miroirs M5, M6, M7 et M8 est tel que l'image de la source S par réflexions successives sur les M5, M6, M7 et M8 est située sur les moyens d'analyse de la surface d'onde ASO. Il suffit de choisir correctement l'emplacement des miroirs M7 et M8, leur inclinaison et la courbure du miroir sphérique M7.

Les modes de réalisation de l'arriérer plan technique nécessitent l'emploi d'un miroir mobile que l'on doit pouvoir positionner en position de contrôle avec une grande précision en orientation s'il s'agit d'un miroir plan et une grande précision en position et en orientation s'il s'agit d'un miroir concave ayant de la puissance optique. Aussi, dans un mode de réalisation représentée en figure 6, les moyens de contrôle comportent simplement une source S disposée au voisinage du foyer intermédiaire et au voisinage du champ du détecteur analysant la surface d'onde. La tache image de la source S est aberrante car elle est placée en amont du miroir M4 qui corrige les aberrations du télescope de tête constitué par les miroirs M1 et M2.

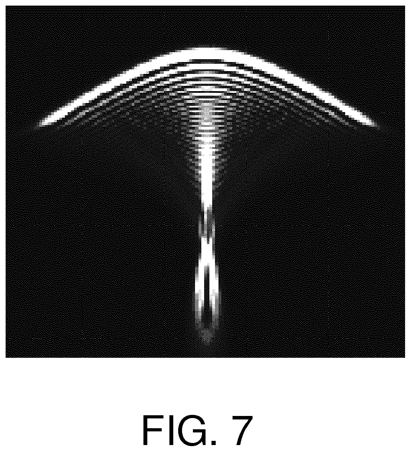

Cela ne gêne en rien les mesures du miroir déformable qui peuvent s'obtenir tout aussi bien avec une image aberrante. Un exemple d'allure de tache d'image aberrante au plan focal de l'instrument est donné en figure 7. La tache de la figure 7 est en forme d'aigrette symétrique, les franges sont dues à la diffraction.

Avantageusement, on peut placer un élément correcteur, par exemple une lame de phase, pour réduire l'aberration et limiter l'étalement de la tâche acquise par l'analyseur de surface d'onde. Cet élément correcteur peut être placé soit à l'entrée de l'analyseur de surface d'onde ou sur un miroir de renvoi au niveau de la source.

Le champ optique du détecteur analysant la surface d'onde doit être légèrement surdimensionné pour passer à la fois l'image issue du télescope et l'image de la source.

Cette dernière solution présente les avantages de ne nécessiter que des adaptations mineures de l'optique du télescope, de ne pas nécessiter de déplacement de miroir et de permettre un suivi permanent du miroir déformable.

## Revendications

1. Télescope comportant au moins un système optique et des moyens d'analyse (D) de la surface d'onde disposés dans le plan de focalisation dudit système optique, le système optique comprenant une optique de focalisation (M1, M2) et une optique d'agrandissement (M3, M4, M5, M6), l'optique d'agrandissement comportant un miroir déformable (M5) à déformation contrôlée, **caractérisé en ce que** l'optique d'agrandissement comporte un unique miroir concave asphérique (M4) conçu pour corriger les aberrations de l'optique de focalisation et deux miroirs plans (M3, M6) et **en ce que** le télescope comporte des moyens de contrôle du miroir déformable, lesdits moyens de contrôle comportant une source (S) disposée au voisinage du foyer intermédiaire de façon que l'image de ladite source est focalisé par l'optique d'agrandissement sur les moyens d'analyse de la surface d'onde disposés dans le plan focal (P2) du télescope, la tache image de la source étant aberrante à cause de l'action du miroir concave asphérique.

2. Télescope selon la revendication 1, **caractérisé en ce que** la source (S) est disposée dans le plan focal intermédiaire (P1) de l'optique de focalisation.

3. Télescope selon la revendication 2, **caractérisé en ce qu'**un correcteur d'aberration est implanté au niveau de la source ou au niveau des moyens d'analyse de surface d'onde.

4. Télescope selon l'une des revendications précédentes, **caractérisé en ce que** l'optique de focalisation comporte un miroir primaire (M1) concave et un miroir secondaire (M2) convexe.

## Patentansprüche

1. Teleskop, das wenigstens ein optisches System und Mittel (D) zum Analysieren der Wellenoberfläche umfasst, angeordnet in der Fokussierebene des optischen Systems, wobei das optische System eine Fokussieroptik (M1, M2) und eine Vergrößerungsoptik (M3, M4, M5, M6) umfasst, wobei die Vergrößerungsoptik einen verformbaren Spiegel (M5) mit geregelter Verformung umfasst, **dadurch gekennzeichnet, dass** die Vergrößerungsoptik einen einzigen konkaven asphärischen Spiegel (M4), der zum Korrigieren der Aberrationen der Fokussieroptik ausgelegt ist, und zwei Planspiegel (M3, M6) umfasst, und dadurch, dass das Teleskop Mittel zum Steuern des verformbaren Spiegels umfasst, wobei die Steuermittel eine Quelle (S) umfassen, die in der Nähe des Zwischenfokus angeordnet ist, so dass das Bild der Quelle von der Vergrößerungsoptik auf die in der Brennebene (P2) des Teleskops angeordneten Analysemittel der Wellenoberfläche fokussiert wird, wobei der Bildpunkt der Quelle aufgrund der Wirkung des konkaven asphärischen Spiegels abweicht.

2. Teleskop nach Anspruch 1, **dadurch gekennzeichnet, dass** die Quelle (S) in der Zwischenbrennebene (P1) der Fokussieroptik angeordnet ist.

3. Teleskop nach Anspruch 2, **dadurch gekennzeichnet, dass** ein Aberrationskorrektor an der Quelle oder an den Wellenoberflächenanalysemitteln implantiert wird.

4. Teleskop nach einem der vorherigen Ansprüche, dadurch gekennzeichet, dass die Fokussieroptik einen konkaven Primärspiegel (M1) und einen konvexen Sekundärspiegel (M2) umfasst.

## Claims

1. A telescope comprising at least one optical system and wavefront-analyzing means (D) placed in the focal plane of said optical system, the optical system comprising focusing optics (M1, M2) and magnifying optics (M3, M4, M5, M6), the magnifying optics comprising a deformable mirror (M5), the deformation of which is controllable, **characterised in that** the magnifying optics comprise a single aspherical concave mirror (M4) designed to correct the aberrations of the focusing optics and two plane mirrors (M3, M6), and **in that** the telescope comprises means for monitoring the deformable mirror, said monitoring means comprising a source (S) placed in the vicinity of the intermediate focus so that the image of said source is focused by the magnifying optics on the wavefront-analyzing means placed in the focal plane (P2) of the telescope, the dark image of the source being aberrant due to the action of the aspherical concave mirror.

2. The telescope according to Claim 1, **characterised in that** the source (S) is placed in the intermediate focal plane (P1) of the focusing optics.

3. The telescope according to Claim 2, **characterised in that** an aberration corrector is implanted at the source or at the wavefront-analyzing means.

4. The telescope according to any of the preceding claims, **characterised in that** the focusing optics comprise a concave primary mirror (M1) and a convex secondary mirror (M2).
